**Europäisches Patentamt**

**European Patent Office**

**Office européen des brevets**

(19) ⑲

(11) Veröffentlichungsnummer : **0 173 768**
**B1**

(12) **EUROPÄISCHE PATENTSCHRIFT**

(45) Veröffentlichungstag der Patentschrift :
02.03.88

(51) Int. Cl.⁴ : **H 02 J   3/42**

(21) Anmeldenummer : **84115386.9**

(22) Anmeldetag : **13.12.84**

---

(54) **Verfahren zum Parallelschalten von elektrischen Synchronmaschinen und/oder elektrischen Drehstromnetzen.**

---

(30) Priorität : **16.08.84 DE 3430149**

(43) Veröffentlichungstag der Anmeldung :
**12.03.86 Patentblatt 86/11**

(45) Bekanntmachung des Hinweises auf die Patenterteilung : **02.03.88 Patentblatt 88/09**

(84) Benannte Vertragsstaaten :
**CH DE FR IT LI SE**

(56) Entgegenhaltungen :
**FR-A- 2 225 864**
**GB-A- 2 119 526**
**SIEMENS REVIEW, Band 45, Nr. 12, Dezember 1978, Seiten 548 -551, Erlangen, DE; E. BORN et al. "A Paralleling unit of two-channel Design"**

(73) Patentinhaber : **Siemens Aktiengesellschaft Berlin und München**
**Wittelsbacherplatz 2**
**D-8000 München 2 (DE)**

(72) Erfinder : **Leibold, Helmut, Dipl.-Ing.**
**Saubertstrasse 3**
**D-8500 Nürnberg (DE)**

EP 0 173 768 B1

**0 173 768**

**Beschreibung**

Die Erfindung betrifft ein Verfahren zum Parallelschalten nach dem Oberbegriff des Patentanspruchs.

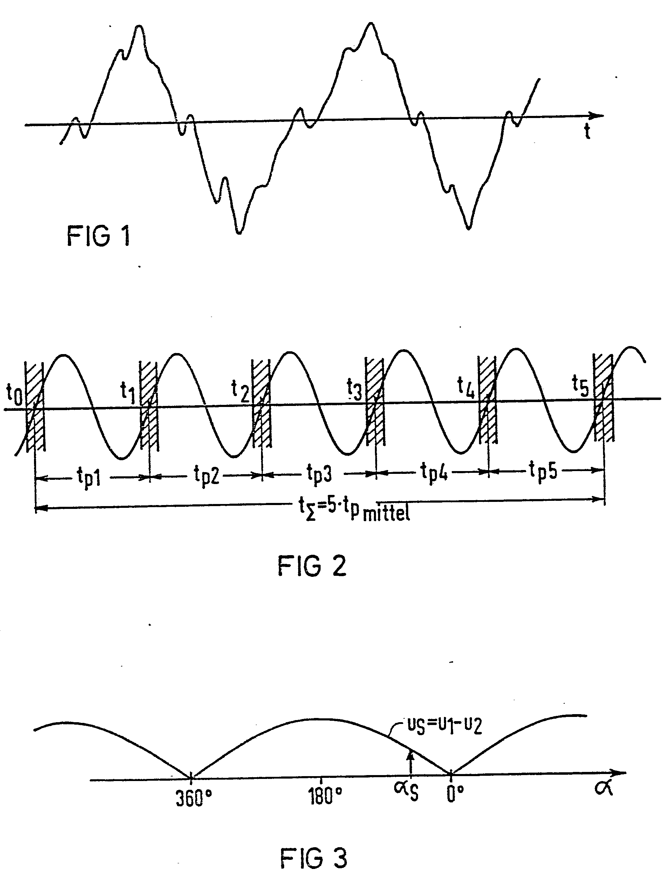

Ein solches Verfahren ist in der Siemens-Zeitschrift 52 (1978) Heft 3, Seiten 149 ff. beschrieben. Dabei werden mit statisch arbeitenden Meßschaltungen die Nulldurchgänge zweier miteinander zu vergleichender Spannungen erfaßt und ausgewertet. Bei diesem Verfahren treten bei stark verzerrten, d. h. gemäß Fig. 1 stark von der Sinusform abweichenden Spannungskurven im Bereich des Nulldurchganges aber unzulässig große Meßfehler auf, die ein gefahrloses Parallelschalten in Frage stellen können, trotz der an sich hohen Schaltgenauigkeit der auf die genannte Weise arbeitenden Synchronisiereinrichtung, die außerdem auch noch die Anpassung der Maschinenfrequenz und der Maschinenspannung der an das Netz parallelzuschaltenden Synchronmaschine an die Netzfrequenz und die Netzspannung vornimmt, so daß der genannte Parallelschaltvorgang selbständig erfolgt. Die Synchronisiereinrichtung prüft demnach, ob an den Zuschaltstellen der Synchronmaschine oder eines Teilnetzes der Winkel $\alpha$ zwischen den beiden zu vergleichenden Spannungen innerhalb bestimmter Grenzwerte liegt und es wird zum Parallelschalten der genaue Schaltpunkt unter Berücksichtigung der jeweils zulässigen Frequenzdifferenz und der für jeden parallelschaltenden Leistungsschalter bekannten Einschaltzeit selbsttätig ermittelt.

Dabei muß der Einschaltbefehl für den betreffenden Leistungsschalter in Abhängigkeit von der Frequenzdifferenz $\Delta f$ und der Schalter-Einschaltzeit $t_E$ bei einem Schaltwinkel $\alpha_s$ vor dem Phasengleichheitspunkt gegeben werden, damit der Schalter genau bei Phasengleichheit der beiden miteinander verglichenen Spannungen schaltet, d. h. seine Kontakte schließt, wobei zunächst unberücksichtigt bleibt, daß bestimmte Werte der Frequenzdifferenzen und der Spannungsdifferenzen einzuhalten sind.

Unter der Annahme $\Delta f = $ const ergeben sich folgende Zusammenhänge

$$\alpha_s = \Delta f \cdot t_E \cdot 360° \qquad (1)$$

wobei für jeden Schalter x sich eine festgelegte Konstante

$$K_x = t_{Ex} \cdot 360° \qquad (2)$$

ergibt, so daß für jeden Schalter ein der Frequenzdifferenz $\Delta f$ proportionaler Schaltwinkel

$$\alpha_{sx} = \Delta f \cdot K_x \qquad (3)$$

vorliegt, bei dem der Einschaltbefehl gegeben werden muß.

Um den genauen Schaltwinkel $\alpha_{sx}$ erhalten zu können, muß daher möglichst genau die Frequenzdifferenz $\Delta f$ ermittelt und zu jedem Zeitpunkt der Winkel $\alpha$ zwischen den beiden zu vergleichenden Spannungen bestimmt werden. Bei Kenntnis von $\Delta f$ und $\alpha$ sowie $t_E$ kann bei dem zugehörigen Schaltwinkel $\alpha_{sx}$ der Einschaltbefehl gegeben werden.

Eine ausreichend genaue Erfassung der obigen Größen setzt aber möglichst verzerrungsfreie, d. h. insbesondere in den Nulldurchgängen weitgehend sinusförmig verlaufende Spannungen voraus. Diese Voraussetzung ist in der Praxis vielfach nicht erfüllt, so daß für Maschinen schädliche und für das Netz unerwünschte Parallelschaltzeitpunkte auftreten würden, die durch Unterlassen des Parallelschaltens vermieden werden müssen.

Der Erfindung liegt daher die Aufgabe zugrunde, auch bei stark verzerrten, d. h. starken Oberschwingungseinflüssen ausgesetzten Spannungen von Synchronmaschinen und/oder Drehstrom-Netzen jeweils den genauen Einschaltzeipunkt zu bestimmen.

Die Lösung der gestellten Aufgabe gelingt bei dem eingangs genannten Verfahren erfindungsgemäß durch die kennzeichnenden Maßnahmen des Patentanspruchs.

Zum leichteren Verständnis der Erfindung wird zunächst wieder von der Annahme $\Delta f = $ const ausgegangen, die aus beiden erfaßten Frequenzen ermittelt wird.

Für die Erfassung der Frequenzen beider zu vergleichender Spannungen wird jeweils gemäß Fig. 2 die Periodendauer über n Perioden ausgewertet, wobei die Periodenzahl n vorgegeben oder abhängig von der Frequenzdifferenz $\Delta f$ in bestimmten Grenzen festgelegt werden kann. Die beiden zu vergleichenden Spannungen (Meßspannungen) können beispielsweise alle x Millisekunden abgetastet und ihre abgetasteten Analogwerte in Digitalgrößen umgewandelt werden. Wenn dabei gemäß Fig. 2 beispielsweise im Zeitpunkt $t_o$ ein Nulldurchgang erkannt wird, dann läßt sich durch Interpolation der angenommene Nulldurchgang bei $t_o$ aus mindestens zwei Messungen ermitteln. So kann bei einer Abtastfrequenz von 1 kHz für die Erfassung der Periodendauer jede 1 ms (x = 1) eine Abtastung erfolgen und die Millisekunden bis zum Zeitpunkt $t_5$ in Fig. 2 sowie gleichzeitig die Zahl der in den schraffierten Zonen zu den Zeitpunkten $t_1$, $t_2$, $t_3$, $t_4$ und $t_5$ festgestellten Nulldurchgänge gezählt werden. Zum Zeitpunkt $t_5$ wird wiederum durch Interpolation der angenommene Nulldurchgang festgestellt, womit die Summe $t_\Sigma$ von fünf Periodendauern zu $t_\Sigma = t_{1p} + t_{2p} + t_{3p} + t_{4p} + t_{5p}$ festgelegt ist. Der Mittelwert $t_{pm}$ für eine Periodendauer ist $t_\Sigma/n$ mit n = 5 und der Frequenzmittelwert $f_m = 1/t_{pm}$. Da bei diesem « Mittelwertver-

2

0 173 768

fahren » Erfassungsfehler nur bei $t_o$ und $t_n$, d. h. nur am Anfang und am Ende jeder Periodenfolge von n Perioden auftreten und diese bei $n > 2$ mit zunehmender Zahl n immer geringeren Einfluß auf die Erfassungsergebnisse ausüben können, kann auf diese Weise eine sehr genaue Ermittlung der Frequenzen der Spannungen auch bei starken Oberschwingungseinflüssen gemäß Fig. 1 erreicht werden.

Für das Zählen der abgetasteten Perioden der Spannungen wird jede der beiden Spannungen nur während einer bestimmten Zeitspanne einer Meßeinrichtung zugeführt, die durch die zulässigen oberen und unteren Grenzwerte der Betriebsfrequenz festgelegt ist.

Bei oberschwingungsbehafteten verzerrten Spannungen nach Fig. 1 können im Bereich des eigentlichen Nulldurchganges entsprechend einer gespeicherten Vergleichs-Sinuskurve mehrere zusätzliche Nulldurchgänge (Fehlernulldurchgänge) auftreten, die im Vergleich mit der Sinuskurve als Fehler erkennbar sind, so daß nur die eigentlichen Nulldurchgänge durch Interpolation über mehr oder wenig weit auseinanderliegende Abtastpunkte feststellbar sind. Bei Auftreten von nicht plausiblen, z. B. durch Störungen hervorgerufenen Nulldurchgängen der Spannungen wird die Messung abgebrochen und anschließend neu begonnen. Um auch in solchen Fällen die notwendigen aktuellen Werte der Frequenzdifferenzen $\Delta f_{akt}$ zu erhalten, wird bei Beginn der nächstfolgenden Periode eine neue Meßreihe mit n-Messungen gestartet, wobei der Meßbeginn der einzelnen Meßreihen jeweils um eine Periode verschoben ist. Im genannten Beispiel mit $n = 5$ werden also immer fünf Messungen durchgeführt. Dabei wird auch geprüft, ob die Frequenzdifferenz $\Delta f$ konstant ist oder sich ändert. Im letzteren Fall kann z. B. beim Synchronisieren eines Generators festgestellt werden, ob er beschleunigt oder verzögert wird.

Zum genauen Ermitteln des notwendigen Schaltwinkels $\alpha_s$ zwischen beiden Meßspannungen wird aus diesen eine Schwebungskurve gebildet und deren « Hüllkurve » ausgewertet. Hierzu wird die eine Spannung von der anderen Spannung subtrahiert, so daß bei gleich großen Spannungen gemäß Fig. 3 bei $\alpha = 0$ die Hüllkurve den Wert Null annehmen kann. Damit wird der Teil der Hüllkurve für die Schaltzeitpunktbestimmung ausgenützt, der die größere Schaltgenauigkeit zuläßt.

Dieser günstige Fall des Wertes Null der Hüllkurve bei $\alpha = 0$ tritt bei ungleich großen, insbesondere bei oberschwingungsbehafteten Spannungen nicht auf. Nach der Erfindung werden nach einem Mittelwertverfahren über eine festgelegte Anzahl von Halbschwingungen der beiden Spannungen die jeweiligen Scheitelwerte der Halbschwingungen ermittelt, was bei sinusförmigen Spannungen mit ausreichender Genauigkeit bereits aus einer einzigen Halbschwingung möglich wäre.

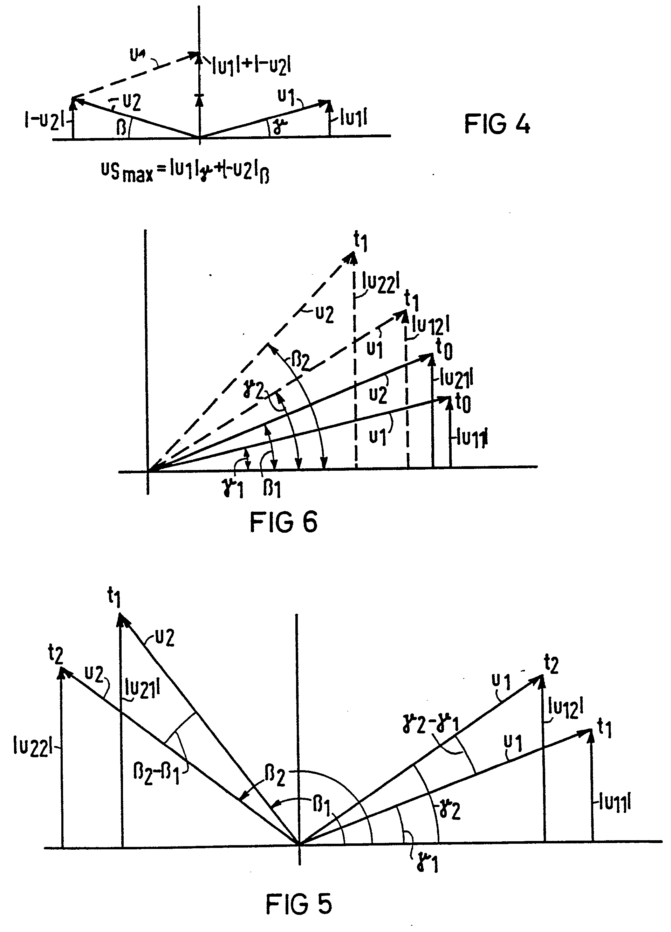

Für jeden ermittelten Scheitelwert wird ein Faktor gewonnen, der eine « Normierung » der folgenden Momentanwerte erlaubt, indem der Faktor die gemessenen Momentanwerte so korrigiert, als ob sie aus einer Spannung mit konstantem Scheitelwert von 100 % gewonnen wären. Bei dem zugrundegelegten Abtastintervall (z. B. jede Millisekunde eine Abtastung) können einzelne Werte der Schwebungskurve festgelegt werden, wobei bei 50 Hz beider Meßspannungen deren einzelne Werte im Abstand von etwa 18° auftreten. Ein Punkt der Hüllkurve dieser Schwebungskurve ist dann genau bestimmt, wenn die « normierten » Momentanwerte beider Spannungen gleich groß sind, d. h. wenn die beiden Zeiger $u_1$ und $u_2$ der Spannungen entsprechend Fig. 4 symmetrisch, d. h. $\gamma = \beta$ zu einer gemeinsamen Bezugslinie (Waagrechten) liegen. Eine Feststellung genau gleicher Momentanwerte $u_s$ der Hüllkurve kann aber nur zufällig erfolgen, da die besagte Abtastung normalerweise unsynchron, d. h. $\gamma \neq \beta$ zu den Frequenzen der beiden Spannungen vorgenommen wird.

Aus einem normierten Momentanwertepaar kann ein Punkt der Hüllkurve ermittelt werden.

Das Prinzip zur Ermittlung von solchen Punkten ist in Fig. 5 angedeutet, wonach man im Abtastzeitpunkt $t_1$ aus den Spannungen $u_1$, $u_2$ die absoluten Momentanwerte $/U_{11}/$ und $/U_{21}/$ erhält. Zum 1 ms späteren Zeitpunkt $t_2$ erhält man die absoluten Momentanwerte $/U_{12}/$ und $/U_{22}/$. Bei gleicher Frequenz $f = 50$ Hz der Spannungen $u_1$ und $u_2$ bewegen sich diese in 1 ms in der gleichen Richtung um 18° ($18° = \beta_2 - \beta_1 = \gamma_2 - \gamma_1$ bei 50-Hz und 1 ms). Aus den « normierten » Momentanwerten können die Winkel $\gamma_1$, $\gamma_2$, $\beta_1$ und $\beta_2$ bestimmt und somit die entsprechenden Punkte auf der Hüllkurve ermittelt werden.

Wenn im Meßzeitpunkt die gemessenen Momentanwerte der Spannungen $u_1$ und $u_2$ gemäß Fig. 5 im benachbarten Quadranten liegen, dann ergeben sich auf der Hüllkurve Punkte $u_s = 2 \cdot \cos (\beta - \gamma/2)$. Wenn gemäß Fig. 6 die Momentanwerte der Spannungen $u_1$ und $u_2$ im Meßzeitpunkt im gleichen Quadranten liegen, ergibt sich für jeden Momentanwert auf der Hüllkurve ebenfalls ein Punkt $u_s = 2 \cdot \cos (\beta - \gamma/2)$. Je nach der Relativlage beider Spannungen $u_1$ und $u_2$ ergeben sich unterschiedlich viele auswertbare Meßpunkte, wobei durch Mittelwertbildung die Oberschwingungseinflüsse weitgehend eliminiert werden. Bei üblicherweise eingestellten Grenzwerten der Frequenzdifferenz $\Delta f$ und einer beispielsweise gewählten Abtastung der Meßspannungen im Abstand von 1 Millisekunde stehen in einer Halbschwingung bis zu 10 Meßwerte zur Auswertung bereit.

Sobald die Bedingung $\alpha_s = \Delta f \cdot K$ erfüllt ist, wird ein Einschaltbefehl gegeben, sofern die wesentlichen Bedingungen $\Delta f <$ Einstellwert und $\Delta U <$ Einstellwert erfüllt sind und eine Annäherung der beiden Spannungen an den Schaltpunkt erfolgt.

Um beispielsweise durch Frequenzänderungen bedingte zusätzliche und unzulässige Meßfehler auszuschließen, wird bei Annäherung der beiden Spannungen in die Umgebung des Schaltpunktes zunächst der Faktor K erhöht, um eine längere Schaltereinschaltzeit $t_E$ vorzutäuschen. Der erste ermittelte fiktive Schaltpunkt für $t_E$ wird registriert. Nach beispielsweise 10 ms wird der Faktor K auf einen Wert verstellt, bei dem nach weiteren 10 ms und unveränderter Frequenzdifferenz $\Delta f$ ein erneuter

3

Einschaltbefehl erfolgen müßte, wobei dieser Vorgang kontinuierlich solange wiederholt wird, bis der Schaltwinkel $\alpha_s$ beim tatsächlich erforderlichen Faktor $K_x$ ermittelt wird. Diese Meßwiederholungen lassen alle Störungen erkennen, die den zulässigen Streubereich der Hüllkurve überschreiten bzw. unterschreiten, so daß auch eine Vorzeichenumkehr der Frequenzdifferenz $\Delta f$ erkennbar wird.

Unabhängig von der vorgenannten Prüfung kann auch die Kontinuität der Spannungsdifferenz als zusätzliches Freigabekriterium für den Einschaltbefehl geprüft werden.

**Patentanspruch**

Verfahren zum Parallelschalten von elektrischen Synchronmaschinen und/oder elektrischen Drehstrom-Netzen unter Erfassung des Nulldurchganges beider miteinander zu vergleichender Spannungen und deren gegenseitiger Phasenlage zur Bildung eines Einschaltbefehles für Leistungsschalter unter Berücksichtigung seiner Eigenschaltzeit sowie der Frequenzdifferenz $\Delta f$ zwischen beiden Spannungen, dadurch gekennzeichnet,

daß der aktuelle Mittelwert der Frequenzdifferenz aus mehreren Periodendauern beider Spannungen gebildet wird,

daß nach einem Mittelwertverfahren über eine festgelegte Anzahl von Halbschwingungen der beiden Spannungen die jeweiligen Scheitelwerte der Halbschwingungen ermittelt werden,

daß für jeden ermittelten Scheitelwert ein Faktor gewonnen wird, der eine « Normierung » der folgenden Momentanwerte erlaubt, indem der Faktor die gemessenen Momentanwerte so korrigiert, als ob sie aus einer Spannung mit konstanten Scheitelwert von 100 % gewonnen wären,

daß aus normierten Momentanwertepaaren der beiden Spannungen Punkte der die Schwebungskurve einhüllenden Hüllkurve bestimmt werden, wobei durch Mittelwertbildung die Oberschwingungseinflüsse in den Spannungen weitgehend eliminiert werden und daß aus dem Mittelwert der Frequenzdifferenz und der so erhaltenen Hüllkurve der Schaltpunkt für den Leistungsschalter abgeleitet wird.

**Claim**

A method of connecting synchronous electrical machines and/or electrical three-phase networks in parallel by detecting the zero transitions of the two voltages which are to be compared with one another and their mutual phase position in order to form a connect command for power switches, taking into account inherent switching time and the frequency difference $\Delta f$ between the two voltages, characterised in

that the current mean of the frequency difference is formed from a plurality of periods of both voltages,

that in accordance with a mean value process the respective peak values of the half-cycles are determined over a predetermined number of half-cycles of the two voltages,

that for each determined peak value a factor is obtained which permits a « standardisation » of the following instantaneous values in that the factor corrects the measured instantaneous values as if they were obtained from a voltage with a constant peak value of 100 %, and

that from standardised pairs of instantaneous values of the two voltages points of the envelope curve which enclose the beat curve are determined, whereby harmonic influences in the voltages are substantially eliminated by means value formation and the switching point for the power switch is derived from thus obtained mean values of the frequency difference and the envelope curve.

**Revendication**

Procédé pour brancher en parallèle des machines électriques synchrones et/ou des réseaux électriques triphasés, moyennant la détection de l'annulation de deux tensions devant être comparées entre elles et de leur position de phase réciproque pour former une instruction de déclenchement pour le sectionneur de puissance compte tenu de son instant propre de branchement et de la différence $\Delta f$ entre les fréquences des deux tensions, caractérisé en ce

qu'on forme la valeur moyenne actuelle de la différence des fréquences à partir de plusieurs durées de la période des deux tensions,

qu'on détermine les valeurs crêtes respectives des alternances selon un procédé de formation de la valeur moyenne, sur un nombre déterminé d'alternances,

que pour la valeur crête respectivement déterminée on obtient un facteur qui permet une « normalisation » des valeurs instantanées suivantes, par le fait que ce facteur corrige les valeurs instantanées mesurées comme si elles avaient été obtenues à partir d'une tension possédant une valeur crête constante de 100 %, ·

qu'à partir de couples de valeurs instantanées normalisées des deux tensions, on détermine des points de la courbe enveloppe, qui enveloppe la courbe de battement, auquel cas, les influences d'oscillations harmoniques sont éliminées dans une large mesure des tensions par formation de la valeur moyenne, et qu'à partir de la valeur moyenne de la différence des fréquences et de la courbe enveloppe ainsi obtenue, on obtient le point de commutation pour le sectionneur de puissance.

FIG 1

FIG 2

$t_\Sigma = 5 \cdot t_{p\,\overline{mittel}}$

$t_{p1}$    $t_{p2}$    $t_{p3}$    $t_{p4}$    $t_{p5}$

$t_0$   $t_1$   $t_2$   $t_3$   $t_4$   $t_5$

FIG 3

$u_S = u_1 - u_2$

360°    180°   $\alpha_S$   0°   $\alpha$

FIG 4

$$US_{max} = |u_1|_\gamma + |-u_2|_\beta$$

FIG 6

FIG 5